## Europäisches Patentamt

## European Patent Office

## Office européen des brevets

(19)

(11) Veröffentlichungsnummer: **0 302 817**
**B1**

(12) # EUROPÄISCHE PATENTSCHRIFT

(45) Veröffentlichungstag der Patentschrift:
07.11.90

(21) Anmeldenummer: 88730169.5

(22) Anmeldetag: 29.07.88

(51) Int. Cl.⁵: **B60B 33/00**, F16C 13/00,
F16B 43/00

(54) Halterung für eine Führungsrolle an einem Trägerteil.

(30) Priorität: 05.08.87 DE 8710846 U

(43) Veröffentlichungstag der Anmeldung:
08.02.89 Patentblatt 89/6

(45) Bekanntmachung des Hinweises auf die Patenterteilung:
07.11.90 Patentblatt 90/45

(84) Benannte Vertragsstaaten:
DE FR GB IT

(56) Entgegenhaltungen:
FR-A- 2 177 283
GB-A- 1 090 568
US-A- 3 183 762
US-A- 3 746 413
US-A- 4 402 556
US-A- 4 523 861

(73) Patentinhaber: Siemens Aktiengesellschaft,
Wittelsbacherplatz 2, D-8000 München 2(DE)

(72) Erfinder: Dreinhoff, Karl-Heinz, Alsterweg 55b,
D-1000 Berlin 37(DE)

**Beschreibung**

Die Erfindung betrifft eine Halterung für eine gegenüber einem Trägerteil in axialer Richtung verstellbare Führungsrolle mit einem einseitig an dem Trägerteil befestigten und die Führungsrolle tragenden Bolzen.

Bei einer derartigen aus dem Buch von F. Kotzer: "Bauelemente der Feinmechanik", 8. Auflage, 1959, VEB Verlag Technik Berlin, Seiten 208 bis 210 bekannten Halterung ist eine Rolle unmittelbar auf einem einseitig an einem Trägerteil befestigten Bolzen drehbar gelagert. Um eine axiale Verschiebung der Rolle zu ermöglichen, ist der Bolzen mitsamt der von ihm getragenen Rolle gegenüber dem Trägerteil an diesem axial verstellbar gehalten. Dazu ist der Bolzen entweder in einem Durchgangsloch des Trägerteils verschiebbar gelagert und durch eine Klemmschraube arretierbar oder mit einem Außengewinde versehen und in einem Durchgangsloch mit Innengewinde des Tragteils eingeschraubt, wobei die Sicherung durch eine auf dem Bolzen aufsitzende Gegenmutter erfolgt. Aufgrund der Rückwirkung der Sicherungselemente (Klemmschraube bzw. Gegenmutter) auf die Lagerung des Bolzens in dem Trägerteil ist nach einer erfolgten Einstellung des Bolzens in axialer Richtung eine nachträgliche unerwünschte Verstellung des Bolzens und damit der Rolle durch die Betätigung der Sicherungselemente nicht ausgeschlossen. Dies ist jedoch insbesondere dann von Nachteil, wenn die Rolle die Funktion einer Führungsrolle hat, die neben radialen Kräften auch axiale Kräfte aufnehmen soll.

Der Erfindung liegt die Aufgabe zugrunde, bei einer Halterung für eine Führungsrolle an einem Trägerteil eine axiale Verstellbarkeit der Laufrolle gegenüber dem Trägerteil ohne das Erfordernis einer nachträglichen Betätigung von Sicherungselementen zu ermöglichen.

Gemäß der Erfindung wird die Aufgabe dadurch gelöst, daß der Bolzen fest mit dem Trägerteil verbunden ist, daß die Führungsrolle auf einer Gewindebuchse drehbar gelagert ist, daß die Gewindebuchse auf dem mit einem Außengewinde versehenen Bolzen aufgeschraubt ist und daß zwischen dem Trägerteil und der Gewindebuchse ein den Bolzen ringförmig umgebendes Federelement eingespannt ist.

Ein wesentlicher Vorteil der erfindungsgemäßen Führungsrollenhalterung besteht darin, daß das Federelement eine ständige Sicherung der jeweiligen Lage der Führungsrolle in axialer Richtung zu dem Trägerteil gegen unbeabsichtigtes Verstellen bewirkt, so daß zusätzlich zu betätigende Sicherungselemente entfallen können. Die Reibung zwischen der Gewindebuchse, dem Federelement und dem Trägerteil sowie die durch die Federkraft erzeugte Reibung im Gewinde verhindern nämlich bei Drehung der Führungsrolle ein Losdrehen der Gewindebuchse von dem Bolzen. Hinzu kommt, daß aufgrund der gegen die Einschraubrichtung der Gewindebuchse wirkenden Federkraft des Federelementes auch bei wechselnder axialer Kraftbeanspruchung der Führungsrolle ein mögliches Spiel im Gewinde zwischen der Gewindebuchse und dem Bolzen ausgeschaltet wird, so daß wegen der zusätzlich festen Verbindung des Bolzens mit dem Trägerteil die Führungsrolle in axialer Richtung zu dem Trägerteil spielfrei gelagert ist; der Bolzen kann im Rahmen der Erfindung wahlweise an dem Trägerteil angeschraubt oder angenietet sein.

Entsprechend einer bevorzugten Weiterbildung der neuerungsgemäßen Halterung besteht der Bolzen aus einem Lagerzapfen, der im Bereich der Verbindung des Bolzens mit dem Trägerteil einen mit dem Außengewinde versehenen Bund aufweist; die Gewindebuchse weist ein auf dem Lagerzapfen aufsitzendes und die Führungsrolle tragendes Hülsenteil auf, das an einem Ende aufgeweitet und mit einem Innengewinde versehen auf dem Bund des Bolzens aufgeschraubt ist. Da der Lagerzapfen das Hülsenteil der Gewindebuchse mit der Führungsrolle trägt, wird nahezu die gesamte radiale Kraftbeanspruchung der Führungsrolle von dem Lagerzapfen aufgenommen, so daß zum einen das Gewinde zwischen der Gewindebuchse und dem Bolzen lediglich in axialer Richtung belastet wird und zum anderen in radialer Richtung eine spielfreie Halterung der Führungsrolle gegenüber dem Trägerteil erreicht wird, zumal der Bolzen mit dem Trägerteil fest verbunden ist. Zur Erhöhung der das unbeabsichtigte Losschrauben der Gewindebuchse von dem Bolzen verhindernden Reibung zwischen der Gewindebuchse, dem Federelement und dem Trägerteil weist die Gewindebuchse im Bereich ihrer dem Trägerteil zugewandten Stirnseite vorzugsweise einen Flansch auf. Das zwischen dem Flansch und dem Trägerteil zusammengepreßte Federelement liegt somit relativ großflächig an dem Flansch der Gewindebuchse an, so daß eine hohe Reibung erzeugt wird.

Aufgrund seiner von außen her leichten Zugänglichkeit läßt sich der Flansch der Gewindebuchse in vorteilhafter Weise auch als Einstellelement zur Einstellung des axialen Abstandes der Führungsrolle zu dem Trägerteil verwenden. Hierzu ist der Flansch vorzugsweise als manuell besonders einfach betätigbare Rändelscheibe oder als sowohl manuell als auch mit einem Werkzeug einstellbare Sechskantscheibe ausgebildet. Alternativ hierzu wird eine Einstellung der Gewindebuchse mittels eines Schraubendrehers in vorteilhafter Weise dadurch ermöglicht, daß die Gewindebuchse an ihrer von dem Trägerteil abgewandten Stirnseite einen Schlitz aufweist.

Zur Erläuterung der Erfindung wird im folgenden auf die Figuren der Zeichnung Bezug genommen, von denen

Figur 1 in perspektivischer Darstellung ein bevorzugtes Ausführungsbeispiel der neuerungsgemäßen Halterung für eine Führungsrolle zeigt und

Figur 2 einen Schnitt durch das in Figur 1 dargestellte Ausführungsbeispiel zeigt.

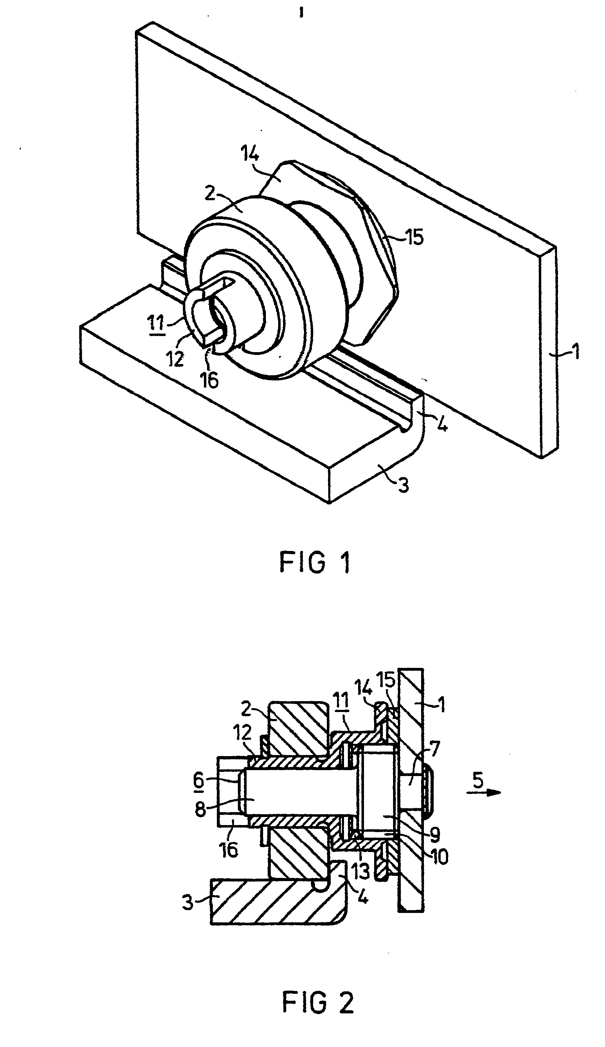

Die Figuren 1 und 2 zeigen ein Trägerteil 1, welches über eine Führungsrolle 2 auf einer Führungsbahn 3 aufliegt. Bei dem Trägerteil 1 handelt es sich um ein von einem Blech gebildetes Gestellteil einer entlang der Führungsbahn 3 zu bewegenden Einrichtung, die hier nicht dargestellt ist. Eine derartige Einrichtung kann beispielsweise ein entlang der Führungsbahn relativ zu einer abzutastenden Vorlage verfahrbarer Abtastschlitten einer optischen Abtasteinrichtung sein, wie sie Gegenstand der älteren, am 11.08.88 veröffentlichten deutschen Patentanmeldung mit dem amtlichen Aktenzeichen DE-A 3 703 217 ist. Eine exakte Führung der jeweiligen das Trägerteil 1 aufweisenden Einrichtung entlang der Führungsbahn 3 wird dadurch erreicht, daß die Führungsbahn 3 seitlich durch einen Bord 4 begrenzt ist, an den sich die Führungsrolle 2 infolge einer hier lediglich durch einen Pfeil 5 symbolisierten Krafteinwirkung auf das Trägerteil 1 abstützt.

Zur Halterung der Führungsrolle 2 an dem Trägerteil 1 ist mit dem Trägerteil 1 ein Bolzen 6 einseitig durch eine Nietverbindung 7 fest verbunden. Der von dem Trägerteil 1 seitlich abstehende Teil des Bolzens 6 ist als Lagerzapfen 8 mit einem an dem Trägerteil 1 angrenzenden und als Nietkopf der Nietverbindung 7 dienenden Bund 9 ausgebildet. Der Bund 9 ist mit einem Außengewinde 10 versehen. Die Führungsrolle 2 ist frei drehbar, aber in axialer Richtung verschiebungssicher auf einer Gewindebuchse 11 gelagert, die auf dem Bolzen 6 aufgeschraubt ist. Dazu weist die Gewindebuchse 11 ein auf dem Lagerzapfen 8 aufsitzendes Hülsenteil 12 auf, welches an einem Ende aufgeweitet ist und dort mit einem auf das Außengewinde 10 des Bundes 9 aufgeschraubten Innengewinde 13 versehen ist. Bei dem Außengewinde 10 und dem Innengewinde 13 handelt es sich jeweils um Feingewinde. An ihrer dem Trägerteil 1 zugewandten Stirnseite weist die Gewindehülse 11 einen Flansch 14 auf, zwischen dem und dem Trägerteil 1 ein ringförmiges Federelement 15 eingefügt ist. Dieses Federelement 15 kann wahlweise als Federscheibe oder als elastischer Ring ausgebildet sein. Der Flansch 14 ist in Form einer Sechskantschraube ausgebildet, so daß eine Drehung der Ge windebuchse 11 auf dem Bolzen 6 zur Veränderung des Abstandes der Führungsrolle 2 zu dem Trägerteil 1 von Hand oder mit Hilfe eines Schraubschlüssels vorgenommen werden kann. In diesem Zusammenhang kann der Flansch auch als Rändelscheibe ausgebildet sein. Für eine weitere Einstellungsmöglichkeit der Gewindebuchse 11 mit Hilfe eines Schraubendrehers ist in der von dem Trägerteil 1 abgewandten Stirnseite der Gewindebuchse 11 ein Schlitz 16 enthalten.

Aufgrund der in den Figuren 1 und 2 gezeigten Halterung der Führungsrolle 2 werden alle radial auf die Führungsrolle 2 einwirkenden Kräfte im wesentlichen von dem Lagerzapfen 8 des Bolzens 6 aufgenommen, ohne daß dabei die Gewinde 10 und 13 belastet werden. Kräfte,die in axialer Richtung die Führungsrolle 2 einwirken, werden von den Gewinden 10 und 13 aufgenommen, wobei durch die Federkraft des Federelementes 15 auch bei wechselnder axialer Kraftbeanspruchung der Führungsrolle 2 ein mögliches Spiel in den Gewinden 10 und 13 ausgeschaltet wird. Eine axiale Verstellung des Abstandes der Führungsrolle 2 zu dem Trägerteil 1 erfolgt durch Drehung der Gewindebuchse 11, wobei nach erfolgter Einstellung durch die Reibung zwischen dem Flansch 14 der Gewinde-buchse 11, dem Federelement 15 und dem Trägerteil 1 sowie durch die als Folge der Federkraft erzeugte Reibung in den Gewinden 10 und 13 ein unbeabsichtigtes Losdrehen der Gewindebuchse 11 von dem Bolzen 6 verhindert wird.

## Patentansprüche

1. Halterung für eine gegenüber einem Trägerteil in axialer Richtung verstellbare Führungsrolle mit einem einseitig an dem Trägerteil befestigten und die Führungsrolle tragenden Bolzen,
**dadurch gekennzeichnet,**
daß der Bolzen (6) fest mit dem Trägerteil (1) verbunden ist, daß die Führungsrolle (2) auf einer Gewindebuchse (11) drehbar gelagert ist, daß die Gewindebuchse (11) auf dem mit einem Außengewinde (10) versehenen Bolzen (6) aufgeschraubt ist und daß zwischen dem Trägerteil (1) und der Gewindebuchse (11) ein den Bolzen (6) ringförmig umgebendes Federelement (15) eingespannt ist.

2. Halterung nach Anspruch 1,
**dadurch gekennzeichnet,**
daß der Bolzen (6) aus einem Lagerzapfen (8) besteht, der im Bereich der Verbindung (7) des Bolzens (6) mit dem Trägerteil (1) einen mit dem Außengewinde (10) versehenen Bund aufweist und daß die Gewindebuchse ein auf dem Lagerzapfen (8) aufsitzendes und die Führungsrolle (2) tragendes Hülsenteil (12) aufweist, daß an einem Ende aufgeweitet und mit einem Innengewinde (13) versehen auf dem Bund (9) des Bolzens (6) aufgeschraubt ist.

3. Halterung nach Anspruch 1 oder 2,
**dadurch gekennzeichnet,**
daß die Gewindebuchse (11) im Bereich ihrer dem Trägerteil (1) zugewandten Stirnseite einen Flansch (14) aufweist.

4. Halterung nach Anspruch 3,
**dadurch gekennzeichnet,**
daß der Flansch als Rändelscheibe ausgebildet ist.

5. Halterung nach Anspruch 3,
**dadurch gekennzeichnet,**
daß der Flansch als Sechskantscheibe ausgebildet ist.

6. Halterung nach einem der vorangehenden Ansprüche,
**dadurch gekennzeichnet,**
daß die Gewindebuchse (11) an ihrer von dem Trägerteil (1) abgewandten Stirnseite einen Schlitz (16) aufweist.

## Claims

1. Mounting for a guide roller, which is adjustable in the axial direction in relation to a carrier component, having a pin which is secured on the one side to the carrier component and which carries the guide roller, characterised in that the pin (6) is fixedly connected with the carrier component (1), in that the guide roller (2) is rotatably mounted on a threaded hub (11), in that the threaded hub (11) is screwed on the pin (6) which is provided with an external thread (10) and in that between the carrier component (1) and the threaded hub (11) there is clamped a spring element (15) which annularly surrounds the pin (6).

2. Mounting according to claim 1, characterised in that the pin (6) consists of a bearing journal (8) which, in the region of the connection (7) of the pin (6) with the carrier component (1), has a collar which is provided with the external thread (10) and in that the threaded hub has a sleeve portion (12) which sits on the bearing journal (8) and carries the guide roller (2) and which, widened at one end and provided with an internal thread (13), is screwed on the collar (9) of the pin (6).

3. Mounting according to claim 1 or 2, characterised in that the threaded hub (11) has a flange (14) in the region of its face facing the carrier component (1).

4. Mounting according to claim 3, characterised in that the flange is formed as a knurled disc.

5. Mounting according to claim 3, characterised in that the flange is formed as a hexagonal disc.

6. Mounting according to one of the preceding claims, characterised in that the threaded hub (11) has a slit (16) on its face remote from the carrier component (1).

## Revendications

1. Dispositif de fixation d'un galet de guidage déplaçable dans la direction axiale par rapport à un support, qui comprend un axe fixé d'un côté au support et portant le galet de guidage, caractérisé, en ce que l'axe (6) est relié rigidement au support (1), en ce que le galet de guidage (2) est monté tournant sur une douille taraudée (11), en ce que la douille taraudée (11) est vissée sur l'axe (6) muni d'un filetage (10), et en ce qu'un élément élastique (15) entourant annulairement l'axe (6) est inséré entre le support (1) et la douille taraudée (11).

2. Dispositif de fixation suivant la revendication 1, caractérisé, en ce que l'axe (6) est constitué d'un tourillon (8) qui comporte, dans la région de la liaison (7) de l'axe (6) au support (1), un collet muni du filetage (10), et en ce que la douille taraudée comporte un manchon (12) enfilé sur le tourillon (8) portant le galet de guidage (2), élargi à une extrémité et vissé dans un taraudage (13) prévu sur le collet (9) de l'axe (6).

3. Dispositif de fixation suivant la revendication 1 ou 2, caractérisé, en ce que la douille taraudée (11) comporte une bride (14) dans la région de son côté frontal tourné vers le support (1).

4. Dispositif de fixation suivant la revendication 3, caractérisé, en ce que la bride est constituée sous la forme d'une rondelle moletée.

5. Dispositif de fixation suivant la revendication 3, caractérisé, en ce que la bride est constituée sous la forme d'une rondelle à six-pans.

6. Dispositif de fixation suivant l'une des revendications précédentes, caractérisé, en ce que la douille filetée (11) comporte une fente (16) sur son côté frontal éloigné du support (1).

FIG 1

FIG 2